# EUROPÄISCHE PATENTSCHRIFT

(11) **EP 1 242 749 B1**
(45) Veröffentlichungstag und Bekanntmachung des Hinweises auf die Patenterteilung: **17.03.2004**
(21) Anmeldenummer: 00984608.0
(22) Anmeldetag: 15.12.2000
(51) Int. Cl.: F16B 5/06

(54) **ANORDNUNG ZUM LÖSBAREN ANBRINGEN EINES VERBINDUNGSSTÜCKS ZUM VERBINDEN VON FLÄCHIGEN GEBILDEN**
ARRANGEMENT FOR DETACHABLE ATTACHMENT OF A CONNECTOR PIECE FOR CONNECTING FLAT OBJECTS
DISPOSITIF POUR FIXER DE FA ON AMOVIBLE UNE PIECE D'ASSEMBLAGE SERVANT A L'ASSEMBLAGE D'ARTICLES PLATS

(30) Priorität: 16.12.1999 AT 211699
(43) Veröffentlichungstag der Anmeldung: 25.09.2002
(73) Patentinhaber: Fruit Security Matzer & Pfeiffer OEG, 8211 Grosspesendorf (AT)
(72) Erfinder: MATZER, Rupert, A-8211 Grosspesendorf (DE); PFEIFFER, Martin, A-8211 Grosspesendorf (DE)
(74) Vertreter: Itze, Peter, Dipl.-Ing.
(86) Internationale Anmeldenummer: PCT/AT2000/000344
(87) Internationale Veröffentlichungsnummer: WO 2001/044670

(56) Entgegenhaltungen:
- EP-A- 0 898 878
- FR-A- 2 770 558
- US-A- 3 553 796

## Beschreibung

Die Erfindung bezieht sich auf eine Anordnung zum lösbaren Anbringen eines Verbindungsstücks zum Verbinden von flächigen Gebilden wie Netzen, Planen, Folien od.dgl., an diesen Gebilden, wobei von einer Grundplatte wegragende, mit einer Klemmplatte zusammenwirkende Vorsprünge, z.B. Bolzen, vorgesehen sind.

Bei einer bekannten Ausbildung dieser Art sind von einer Grundplatte wegragende Bolzen vorgesehen, die an ihren freien Enden mit pilzförmigen Köpfen versehen sind. An der als Klemmelement wirkenden Gegenplatte sind den Zwischenräumen zwischen den pilzförmigen Köpfen gegenüberliegend, analog aufgebaute Bolzen vorgesehen, wobei die Distanz zwischen den mit den pilzförmigen Köpfen versehenen Bolzen derart gewählt ist, daß sich die pilzförmigen Köpfe beider Platten mit den etwa ebenen Hinterseiten ineinander verhaken und damit das flächige Gebilde zwischen den einzelnen Bolzen bzw. pilzförmigen Köpfen festklemmen. Eine solche Ausbildung hat den Nachteil, daß dann, wenn diese Befestigungsvorrichtungen an dem flächigen Gebilde einmal angebracht sind, das Lösen dieser Befestigungsvorrichtung von diesem flächigen Gebilde sehr schwierig ist und eine Reihe von aufwendigen Handgriffen erfordert.

Es ist weiters bekannt, flächige Gebilde zwischen zwei geklemmten Teilen einer Klemmeinrichtung festzulegen, wobei z.B. der eine Klemmteil als C-förmige Schiene ausgebildet ist, in welche ein T-förmiger Gegenteil eingreift. Diese bekannte Ausbildung ist dabei insbesondere zum Anbringen von Bahnenmaterial für Zäune, Bespannungen oder ähnliches in dauerhafter, relativ billiger Weise bestimmt. Für das Anbringen solcher Folien sind auch noch weitere andere Ausbildungen bekannt, welche sich von der vorstehend beschriebenen nur dadurch unterscheiden, daß die Klemmschienen andere Querschnittsformen besitzen. Von der Funktion her sind sie jedoch gleich.

Der Erfindung liegt nun die Aufgabe zugrunde, eine Anordnung der eingangs genannten Art zu schaffen, mit welcher ein einfaches Anbringen des Verbindungsstückes an den flächigen Gebilden bzw. auch ein einfaches Lösen ermöglicht ist, wobei das Lösen zerstörungsfrei für das Verbindungsstück erfolgen soll.

Erfindungsgemäß wird diese Aufgabe dadurch gelöst, daß die Vorsprünge hakenartig ausgebildet sind und je ein Langloch in der Klemmplatte durchsetzen, wobei die Langlöcher in Richtung des Hakenfortsatzes der Vorsprünge verlaufen, und wobei die Vorsprünge in der Endstellung, in welcher die Hakenfortsätze die Rückseite der Klemmplatte hintergreifen, gegenüber der Klemmplatte gegen Verschieben, z.B. mittels Keile, sicherbar sind. Eine derartige Anordnung ist leicht an dem flächigen Gebilde dadurch anzubringen, daß die Grundplatte mit ihren Vorsprüngen durch das flächige Gebilde, wie ein Netz, Planen, Folien od.dgl. hindurchgesteckt und das Klemmelement dann durch Durchstecken der Vorsprünge durch die Langlöcher aufgesetzt und danach die Klemmplatte so gegenüber der Grundplatte entlang der Langlöcher verschoben wird, daß die Hakenfortsätze die Rückseite der Klemmplatte hintergreifen. Danach brauchen lediglich die Keile eingesetzt zu werden, wodurch ein Herabfallen der Klemmplatte von den Vorsprüngen der Grundplatte verhindert ist. Das Durchstecken der Vorsprünge durch das flächige Gebilde kann dabei entweder gleichzeitig mit dem Aufsetzen der Klemmplatte oder nacheinander erfolgen. Dies hängt im wesentlichen auch von der Art des flächigen Gebildes ab. Zum Lösen des Verbindungselementes von dem flächigen Gebilde ist es lediglich erforderlich, die Keile aus ihrer die Fortsätze gegenüber der Klemmplatte fixierenden Lage herauszuziehen, wonach dann die Klemmplatte wieder entlang der Langlöcher so verschiebbar ist, daß die Vorsprünge mit ihren Hakenfortsätzen derart die Langlöcher durchragen, daß die Klemmplatte von den Vorsprüngen abziehbar ist. Danach ist das Verbindungsstück bzw. die Grundplatte desselben aus dem flächigen Gebilde herausnehmbar und solcherart von diesem flächigen Gebilde getrennt.

Vorteilhafterweise können die Keile an einem gemeinsamen Träger angebracht sein, welcher über eine lösbare Schnappverbindung an der Klemmplatte festlegbar ist. Dadurch ist das Einsetzen bzw. Herausnehmen der Keile durch einfaches Einbringen bzw. Herausnehmen des Trägers ermöglicht. Für eine besonders einfache und auch funktionelle Ausbildung kann an der Klemmplatte an der der Grundplatte abgewandten Seite ein von der Grundplatte wegweisender Kragen vorgesehen sein, wobei der Träger für die Keile als eine im wesentlichen ebene Platte ausgebildet ist, die in den Rand des Kragens einsetzbar und dort mittels einer Schnappverbindung festlegbar ist. Dies ermöglicht einen Abschluß der Klemmplatte an der der Grundplatte abgewandten Seite, sodaß die die Klemmplatte durchragenden Vorsprünge nicht sichtbar und auch vor Verschmutzungen od.dgl. geschützt sind. Dabei kann der Kragen am Umfang der Klemmplatte umlaufend und von dieser etwa rechtwinkelig abstehend angeordnet sein, was eine besonders einfach zu formende Ausbildung ergibt.

Ein insbesondere mit einer Anordnung zum Anbringen an ein flächiges Gebilde versehenes Verbindungsstück kann dabei aus Verbindungsteilen bestehen, von welchen einer an der Grundplatte an der den hakenartigen Vorsprüngen abgewandten Seite Verbindungselemente zum Zusammenwirken mit an dem anderen Verbindungsteil vorgesehenen Gegenstücken aufweisen, wobei das Verbindungselement als T-Profil ausgebildet ist, das in eine mit gegengleichem Profil versehene Aufnahmenut des Gegenstückes einschiebbar und in eingeschobener Lage mittels einer lösbaren Rastverbindung festlegbar ist, wobei die beiden zusammenwirkenden Verbindungsteile das gesamte Verbindungsstück bilden. Damit ist es in besonders einfache Weise möglich, die Ränder zweier aneinanderstoßender flächiger Gebilde miteinander zu verbinden, indem der Verbindungsteil des einen flächigen Gebildes und das Gegenstück des Verbindungsteiles des anderen flächigen Elementes ineinandergeschoben und miteinander verrastet wird.

Vorteilhafterweise kann die Höhenabmessung des einschiebbaren Bereiches des das T-Profil aufweisenden Verbindungselementes geringer sein als die Höhenabmessung des aufnehmenden Profils, wodurch ein Spiel zwischen dem mit dem Verbindungselement und dem mit dem Gegenstück versehenen Verbindungsteil gegeben ist. Damit ist ein besonders leichtes Einschieben und ein leichtes Lösen der Rastverbindung gegeben. Es kann nämlich an einem der beiden Verbindungsteile eine Rastzunge und an dem anderen der beiden Verbindungsteile, dem freien Ende der Rastzunge gegenüberliegend, eine Rastausnehmung vorgesehen sein, wobei an dem die Rastausnehmung aufweisenden Teil zusätzlich ein an dem beweglichen Teil der Rastzunge in Anlage bringbarer Druckkörper angeordnet ist, und wobei der Bewegungsweg des freien Endes der Rastzunge beim Zueinanderbewegen der beiden Verbindungsteile und die Eindringtiefe des freien Endes der Rastzunge in die Rastausnehmung etwa dem Spiel zwischen den beiden Verbindungsteilen entspricht. Damit ist auf einfache Weise durch bloßes Gegeneinanderbewegen der beiden Verbindungsteile die Rastverbindung lösbar. Schließlich können an beiden Verbindungsteilen an den einander zugewandten Seiten im eingeschobenen Zustand in ihrer im Rahmen des Spiels voneinander entfernten Lage einander hintergreifende Vorsprünge vorgesehen sein, die durch die federnde Rastzunge über den Druckkörper in dieser hintergreifenden Lage gehalten sind, wobei die Höhe des übergreifenden Bereiches der Vorsprünge etwa dem Spiel zwischen den beiden Verbindungsteilen entspricht. Es ist damit eine doppelte Festlegung der beiden Verbindungsteile aneinander gegeben, u.zw. einmal über die Rastzunge und das andere Mal über die zusätzlichen einander hintergreifenden Rastvorsprünge.

In der Zeichnung ist ein Ausführungsbeispiel des Erfindungsgegenstandes dargelegt.
Fig. 1 zeigt den Erfindungsgegenstand in Vorderansicht,
Fig. 2 ist ein Schnitt nach Linie II-II und
Fig. 3 nach Linie III-III.
Fig. 4 ist eine Unteransicht des mit den Keilen versehenen Trägers,
Fig. 5 eine Ansicht des Trägers gemäß Fig. 4 in Richtung Pfeil V gesehen,
Fig. 6 zeigt eine Ansicht in Richtung des Pfeiles VI der Fig. 4 gesehen.
Fig. 7 ist ein Teilschnitt nach Linie VII-VII der Fig. 4, und
Fig. 8 ein Teilschnitt nach Linie VIII-VIII der Fig. 4.
Fig. 9 veranschaulicht den Klemmteil in Draufsicht,
Fig. 10 gibt einen Schnitt nach Linie X-X der Fig. 9 wieder.
Fig. 11 ist ein Schnitt nach Linie XI-XI der Fig. 9.
Fig. 12 ist eine vergrößerte Detailansicht des Bereiches XII der Fig. 9, und
Fig. 13 eine vergrößerte Detailansicht des Details XIII der Fig. 9.
Fig. 14 ist ein Schnitt nach Linie XIV-XIV der Fig. 12 und
Fig. 15 ein Schnitt nach Linie XV-XV der Fig. 13.
Fig. 16 ist eine Unteransicht der Grundplatte des einen Verbindungsteiles, und
Fig. 17 eine Vorderansicht dieser Grundplatte.
Fig. 18 ist ein Schnitt nach Linie XVIII-XVIII der Fig. 16.
Fig. 19 gibt einen Schnitt nach Linie XIX-XIX der Fig. 16 wieder.
Fig. 20 zeigt einen Schnitt nach Linie XX-XX der Fig. 16.
Fig. 21 ist eine Detailansicht gemäß Kreis 21 der Fig. 19 in größerem Maßstab.
Fig. 22 ist eine Ansicht der Grundplatte des anderen Verbindungsteiles, und
Fig. 23 eine Vorderansicht derselben.
Fig. 24 gibt einen Schnitt nach Linie XXIV-XXIV der Fig. 22 wieder.
Fig. 25 zeigt einen Schnitt nach Linie XXV-XXV der Fig. 22, und
Fig. 26 einen Schnitt nach Linie XXVI-XXVI der Fig. 22.
Fig. 27 gibt eine Detailansicht gemäß Kreis XXVII der Fig. 25 wieder.
Fig. 28, 29, 30 zeigen im Schnitt analog Linie XIX-XIX der Fig. 16 bzw. XXV-XXV der Fig. 22 die beiden Verbindungsteile in den einzelnen Phasen des Ineinandersteckens.

Mit 1 und 2 sind die beiden Verbindungsteile bezeichnet, wobei jeder der beiden Verbindungsteile eine Grundplatte 3 bzw. 4 aufweist, die mit einer Klemmplatte 5 bzw. 6 zusammenwirkt.

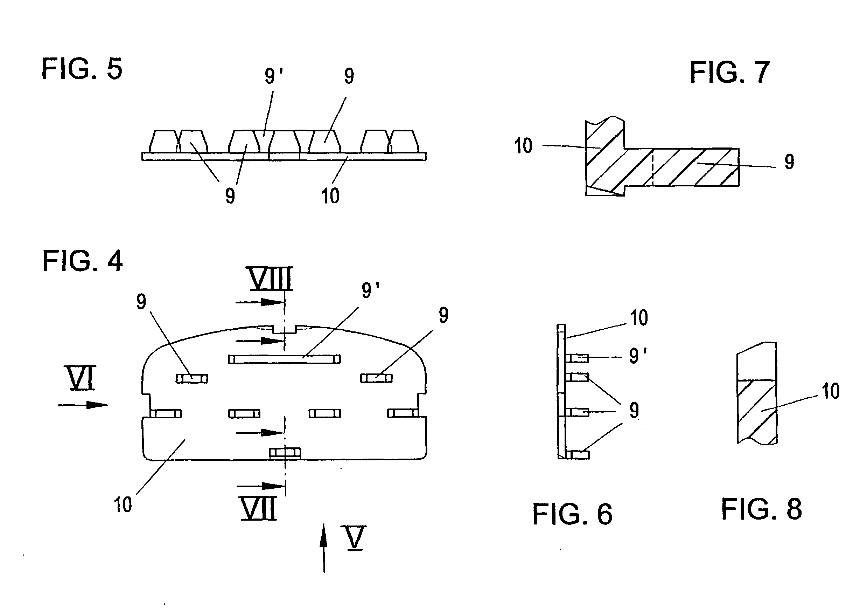

Von jeder der Grundplatten 3 bzw. 4 stehen Vorsprünge 7 ab, die hakenartig ausgebildet sind und durch Langlöcher 8 in den Klemmplatten 5 bzw. 6 hindurchragen. Die Langlöcher 8 sind alle zueinander parallel in der Klemmplatte 5 bzw. 6 angeordnet und weisen in bezug auf die Vorsprünge 7 gleiche Anordnung auf. Dadurch ist es möglich, nach Durchstecken der Vorsprünge 7 durch die Langlöcher die Klemmplatten 5 bzw. 6 so in bezug auf die Grundplatten zu verschieben, daß alle hakenartigen Vorsprünge 7 die der Grundplatte 3 bzw. 4 abgewandte Wandung der Klemmplatte 5 bzw. 6 hintergreifen. Dies wird später noch im Detail dargelegt. Mit 9 sind Keile bezeichnet, die an einem gemeinsamen Träger 10 angebracht sind und in eingeschobenem Zustand die Vorsprünge 7 an ihren den hakenartigen Ansätzen entgegengesetzten Seiten derart hintergreifen, daß ein Verschieben der Vorsprünge 7 in bezug auf die Klemmplatten 5 bzw. 6 dadurch vermieden ist, daß diese Keile 9 über die gemeinsamen Träger 10 mit den Klemmplatten 5 bzw. 6 fest verbunden sind. Die gemeinsamen Träger 10 sind dabei über eine Schnappverbindung 11 mit den Klemmplatten 5 bzw. 6 verbunden. Wie aus den Fig. 4 bis 8 erkennbar, ist der gemeinsame Träger 10 plattenartig ausgebildet, von welchem die Keile 9 senkrecht abstehen, u.zw. solcherart, daß hinter jedem der Vorsprünge 7 ein Keil 9 zu liegen kommt. Dabei ist erkennbar, daß einer der Keile 9' so lang ausgeführt ist, daß er für zwei der Vorsprünge dient. Dies ist für die Festigkeit des gemeinsamen Trägers 10 mitbestimmend.

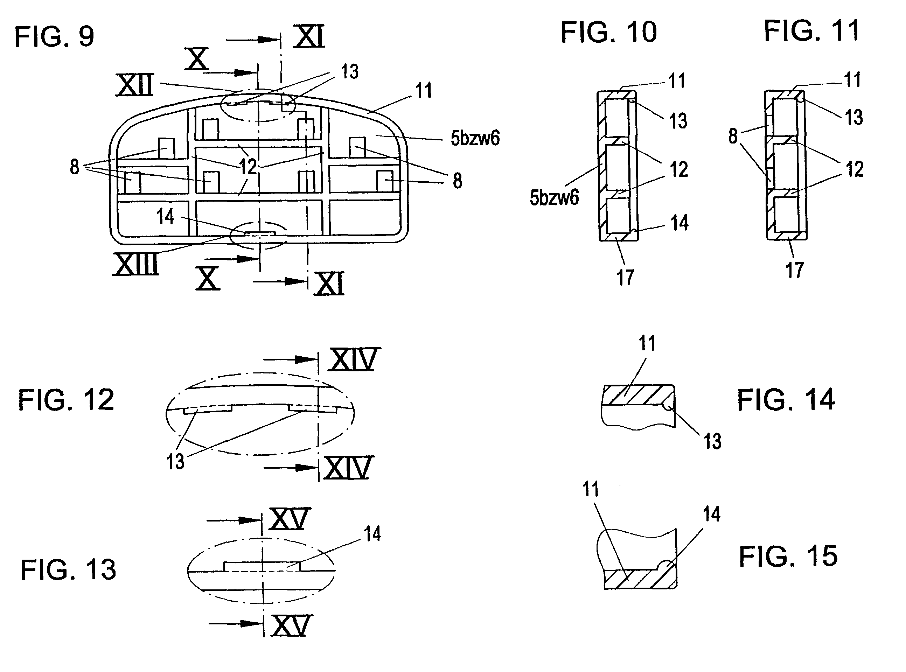

In den Fig. 9 - 15 ist die Ausbildung der Klemmplatten 5, 6 an der den Grundplatten 3, 4 abgewandten Seite wiedergegeben, wobei im Hinblick darauf, daß beide Klemmplatten an dieser Seite gleich ausgebildet sind, die Beschreibung für beide Klemmplatten bestimmt ist. Die Klemmplatten weisen an der der Grundplatte abgewandten Seite einen umlaufenden Kragen 11 auf, zwischen welchen Verbindungsstege 12 verlaufen, u.zw. derart, daß diese Verbindungstege 12 bei eingesetztem Träger 10 an der den Vorsprüngen 7 abgewandten Rückseite der Keile 9 anliegen. Dadurch findet ein zusätzliches Abstützen der Keile 9 in bezug auf die Vorsprünge 7 statt, wodurch die Vorsprünge 7 in bezug auf ihre Lage zur Klemmplatte 5 bzw. 6 zusätzlich abgestützt sind. Mit 13 und 14 sind Rastnasen für das Festhalten des eingesetzten gemeinsamen Trägers 10 der Keile 9 bezeichnet.

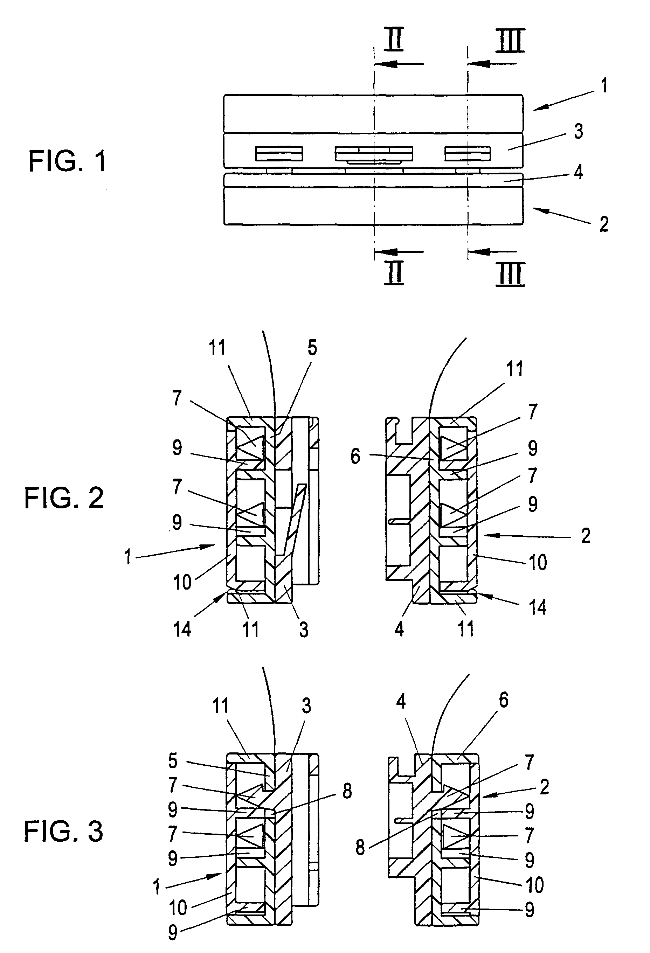

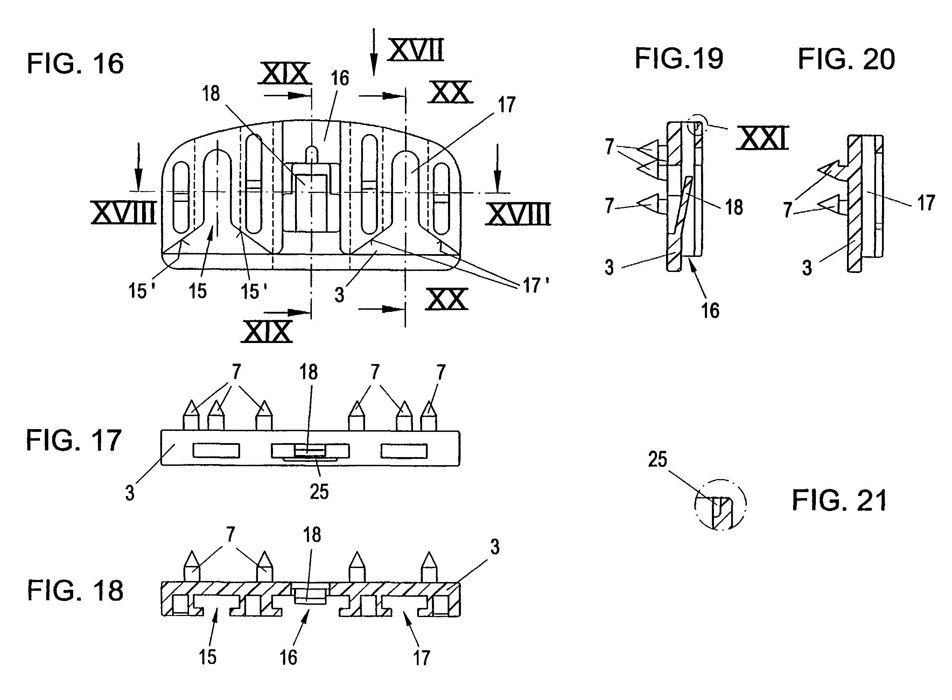

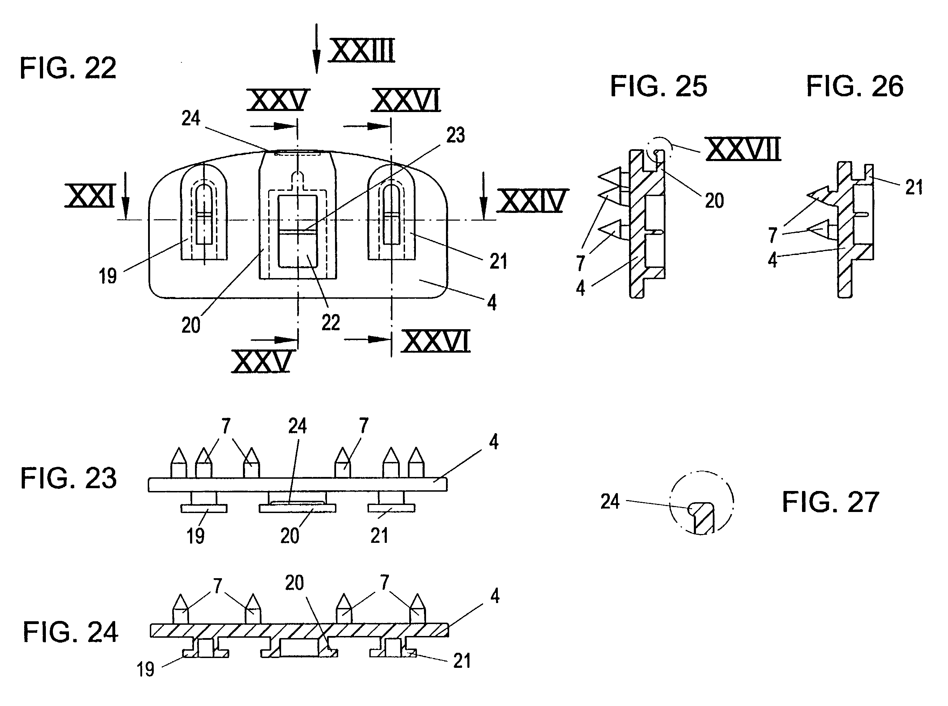

Die hakenartige Ausbildung der Vorsprünge 7 ist deutlich aus den Fig. 19, 20 bzw. 25 und 26 ersichtlich, wobei das Hintergreifen der Klemmplatten 5 bzw. 6 sehr deutlich aus Fig. 3 erkennbar ist.

Wie aus den Zeichnungen erkennbar, sind die Vorsprünge 7 konisch bzw. prismatisch zulaufend ausgebildet, wodurch das Einsetzen bzw. das Durchstechen des flächenartigen Gebildes erleichtert ist.

In den Fig. 16 bis 21 ist die Grundplatte 3 bzw. deren Ausbildung an der den Vorsprüngen 7 abgewandten Seite wiedergegeben. Die Grundplatte 3 weist an der den Vorsprüngen 7 abgewandten Seite C-Profil förmige Nuten auf, die alle parallel zueinander verlaufen. In der mittleren Nut 16 ist eine federnde Rastzungen 18 vorgesehen, welche über den Boden der Nut 16 zur Öffnung hin vorsteht.

Die beiden außenliegenden Nuten 15 und 17 weisen an ihren offenen Seiten zueinander konvergierende Seitenflanken 15', 17' auf (siehe Fig. 16), wodurch das Einschieben der Paßteile erleichtert ist.

Die mit der Grundplatte 3 zusammenwirkende Grundplatte 4 weist an ihrer den Vorsprüngen 7 abgewandten Seite mit den Nuten 15, 16, 17 zusammenwirkende T-förmige Führungsschienen 19, 20, 21 auf, wobei die in Einschubrichtung vorderen Enden der T-förmigen Führungsschienen 19 und 21 abgerundet sind, um solcherart einfach entlang der Führungsflanken 15', 17' in die Nut 15, 17 hineingleiten zu können.

In der zentralen T-förmigen Führungsschiene 20 ist der Rastzunge 18 gegenüberliegend eine Ausnehmung 22 vorgesehen, deren Außenabmessungen so gewählt sind, daß in zusammengeschobenem Zustand der beiden Verbindungsteile 1, 2 die Rastzunge 18 in die Ausnehmung 22 hineingreifen kann, wobei das Ende der Rastzunge 18 an der Anschlagkante 24 der Ausnehmung 22 in Anlage kommt. In dieser Ausnehmung 22 ist ein, vorliegend stegförmiger, Druckkörper 23 vorgesehen, der zur Anlage an der Rastzunge 18 bestimmt ist. Die Form des Druckkörpers 23 ist nicht maßgebend, sondern nur die Möglichkeit des Zusammenwirkens mit der Rastzunge.

An dem mittleren T-förmigen Abschnitt ist an der Vorderkante noch eine Rastnase 24 vorgesehen, welche mit einer Rast 25 der in Einschubrichtung vorderen Begrenzung der Ausnehmung 16 zusammenwirkt.

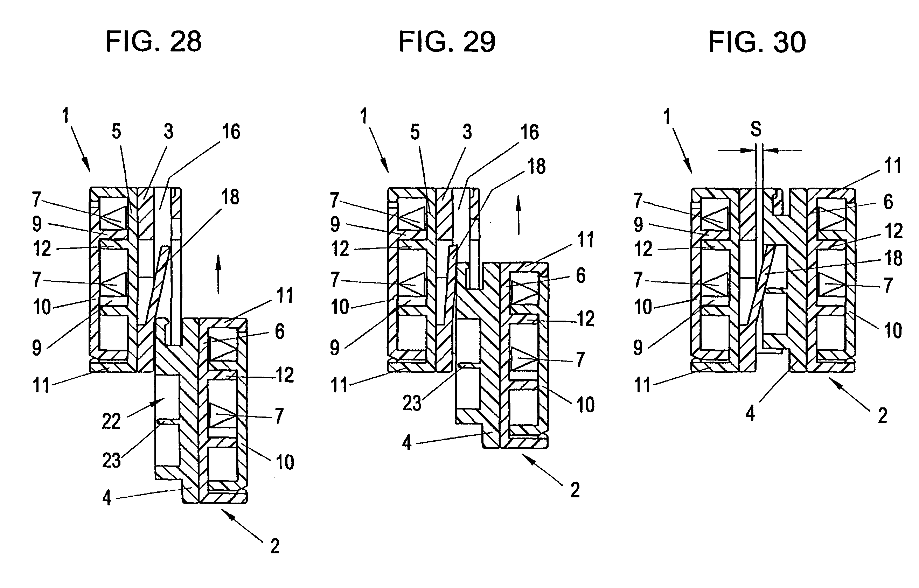

Wie aus Fig. 30 ersichtlich, ist zwischen den beiden Grundplatten 3 und 4 im eingeschobenen Zustand ein Spiel S, welches ein Gegeneinanderbewegen der beiden Grundplatten ermöglicht. Das Spiel S ist dadurch erzielt, daß die Höhe der in die C-Profil Nuten eingreifenden Teile der T-förmigen Führungsschienen geringer ist als die Tiefe der C-Profil Nuten, sodaß eine begrenzte Bewegbarkeit der beiden Grundplatten zueinander und voneinander weg ermöglicht ist. Die Größe dieses Spiels ist dabei derart, daß durch das Gegeneinanderbewegen der beiden Grundplatten die Rastnase 24 aus der Rast 25 herausbewegt und durch den Druckkörper 23, welcher im eingeschobenen Zustand an der ihm zugewandten Fläche der Rastzunge anliegt, die Rastzunge soweit zu dem sie tragenden Grundkörper zurückgebogen wird, daß die vordere Kante der Zunge aus der Ausnehmung 22 herausbewegt ist. In diesem zusammengedrückten Zustand kann dann ein Verschieben der beiden Grundkörper zueinander entlang der Längsrichtung der T-förmigen Führungsschiene bzw. der zugehörigen Profilnuten erfolgen. Durch die federnde Rastzunge 18 wird auch erreicht, daß aufgrund der Anlage des Druckkörpers 23 die beiden Grundplatten voneinander entfernt gehalten werden, wodurch einerseits das Einrasten der Rastnase 24 in die Rast 25 als auch anderseits das Eingreifen des freien Endes der Rastzunge 18 in die Ausnehmung 22 gewährleistet ist.

Beim Gebrauch des Anmeldungsgegenstandes wird zunächst einer der beiden Verbindungsteile an dem einen Rand des flächigen Gebildes und der Gegenteil, also der zweite Verbindungsteil, an dem gegenüberliegenden Rand des flächigen Gebildes dadurch befestigt, daß die beiden Verbindungsteile durch Herausnehmen des gemeinsamen Trägers 10 für die Keile 9 ein Verschieben der Klemmplatten in bezug auf die Grundplatte möglich ist und die Klemmplatten von der zugehörigen Grundplatte abgenommen werden. Die nunmehr freiliegenden Vorsprünge 7 der Grundplatte 3 bzw. 4 werden dann durch das flächige Gebilde durchgesteckt, wonach die zugehörige Klemmplatte 5 bzw. 6 mit ihren Langlöchern 8 über die hakenartigen Vorsprünge geschoben und dann in Plattenebene entlang der Langlöcher so verschoben wird, daß die Haken der Vorsprünge 7 die hintere Fläche der zugehörigen Klemmplatte hintergreifen. Im Anschluß daran wird dann der gemeinsame Träger für die Keile 9 mit den Keilen nach innen gerichtet eingesetzt und fest in den umlaufenden Kragen 11 der Klemmplatten 5, 6 eingeschoben, bis die Rastnasen 13 und 14 den Rand des Trägers 10 hintergreifen.

Sollen nun die beiden Ränder der aneinandergrenzenden, flächenartigen Gebilde miteinander verbunden werden, dann wird der die C-förmigen Führungsschienen 19 - 21 aufweisende Verbindungsteil 2 mit den abgerundeten Teilen der Führungsschienen nach vorne in die C-Profil Nuten 15 - 17 eingeführt, wobei die Führungsflanken 15', 17', die zu den Nuten hin konvergieren, das Einschieben erleichtern. Während des Einschiebens wird die Rastzunge 18 durch die vordere Begrenzung der Ausnehmung 22 zu dem die Rastzunge 18 tragenden Verbindungsteil 1 gedrückt, bis die vordere Begrenzung der Ausnehmung 22 hinter dem Ende der Rastzunge 18 zu liegen kommt. In dieser Endstellung liegt auch die Rastnase 24 gegenüber der Rast 25. Aufgrund des federnden Charakters der Rastzunge 18, die an dem Druckkörper 23 zur Anlage kommt, werden die Grundplatten 3, 4 der Verbindungsteile 1, 2 voneinander weggedrückt, wodurch das freie Ende der Rastzunge 18 in die Ausnehmung 22 einfällt und die Rastnase 24 die Rast 25 hintergreift. In dieser gegenseitigen Lage sind die beiden Verbindungsteile 1, 2 gegen ein gegenseitiges Verschieben gesichert.

Zum Lösen der beiden Verbindungsteile werden diese gegeneinander gedrückt, wobei das Spiel S zwischen den beiden Teilen ausreicht, daß mittels des Druckkörpers 23 die Zunge 18 aus der Ausnehmung 22 zurückbewegt und die Rastnase aus der Rast 25 ausgehoben wird. Danach können dann die Verbindungsteile 1, 2 entlang der Führungsschienen bzw. C-Profil Nuten auseinanderbewegt werden.

Sollen die Verbindungsteile auch von dem zugehörigen flächigen Gebinde gelöst werden, dann braucht lediglich mittels eines einfachen Werkzeuges, z.B. einer Schraubenzieherspitze oder eines Messers, der gemeinsame Träger 10 aus den Rastnasen 13, 14 ausgehoben und damit die Keile 9 aus ihrer sichernden Lage hinter den hakenartigen Vorsprüngen 15 herausgehoben werden. Danach ist es möglich, die Klemmplatten 5 bzw. 6 gegenüber den Grundplatten 3 bzw. 4 entlang der Langlöcher 8 zurückzuschieben, wodurch die Hakenbereiche der hakenartigen Vorsprünge 7 aus ihrer die Klemmplatten 5 bzw. 6 hinterschneidenden Lage herausbewegt werden, sodaß die Klemmplatten von den hakenartigen Vorsprüngen 7 der Grundplatte 3 bzw. 4 abgezogen werden können. Die hakenartigen Vorsprünge werden dann aus dem flächigen Gewebe herausgelöst, wodurch auch die Grundplatten 3 bzw. 4 freigegeben sind. Die Verbindungsteile 1, 2 sind damit für einen erneuten Gebrauch bereit.

## Patentansprüche

1. Anordnung zum lösbaren Anbringen eines Verbindungsstücks zum Verbinden von flächigen Gebilden wie Netzen, Planen, Folien od.dgl., an diesen Gebilden, wobei von einer Grundplatte wegragende, mit einem Klemmelement zusammenwirkende Vorsprünge, z.B. Bolzen, vorgesehen sind, **dadurch gekennzeichnet, daß** die Vorsprünge (7) hakenartig ausgebildet sind und je ein Langloch (8) in der Klemmplatte (5, 6) durchsetzen, wobei die Langlöcher (8) in Richtung des Hakenfortsatzes der Vorsprünge (7) verlaufen, und wobei die Vorsprünge (7) in der Endstellung, in welcher die Hakenfortsätze die Rückseite der Klemmplatte (5, 6) hintergreifen, gegenüber der Klemmplatte gegen Verschieben, z.B. mittels Keile (9), sicherbar sind.

2. Anordnung nach Anspruch 1, **dadurch gekennzeichnet, daß** die Keile (9) an einem gemeinsamen Träger (10) angebracht sind, welcher über eine lösbare Schnappverbindung an der Klemmplatte (5, 6) festlegbar ist.

3. Anordnung nach Anspruch 2, **dadurch gekennzeichnet, daß** an der Klemmplatte (5, 6) an der der Grundplatte (3, 4) abgewandten Seite ein von der Grundplatte (3, 4) wegweisender Kragen (11) vorgesehen ist, wobei der Träger (10) für die Keile (9) als eine im wesentlichen ebene Platte ausgebildet ist, die in den Rand des Kragens (11) einsetzbar und dort mittels der Schnappverbindung (13, 14) festlegbar ist.

4. Anordnung nach Anspruch 3, **dadurch gekennzeichnet, daß** der Kragen (11) am Umfang der Klemmplatte (5, 6) umlaufend von dieser etwa rechtwinkelig abstehend angeordnet ist.

5. Insbesondere mit einer Anordnung nach Anspruch 1 versehenes Verbindungsstück, **dadurch gekennzeichnet, daß** es aus zwei Verbindungsteilen (1, 2) besteht, von welchen einer an der Grundplatte (3, 4) an der den hakenartigen Vorsprüngen (7) abgewandten Seite Verbindungselemente (15, 16, 17 bzw. 19, 20, 21) zum Zusammenwirken mit an dem anderen Verbindungsteil vorgesehenen Gegenstücken aufweist, wobei das Verbindungselement (10, 20, 21) als T-Profil ausgebildet ist, das in eine mit gegengleichem Profil versehene Aufnahmenut (15, 16, 17) des Gegenstückes einschiebbar und in eingeschobener Lage mittels einer lösbaren Rastverbindung (18, 22) festlegbar ist, wobei die beiden zusammenwirkenden Verbindungsteile das gesamte Verbindungsstück bilden.

6. Verbindungsstück nach Anspruch 5, **dadurch gekennzeichnet, daß** die Höhenabmessung des einschiebbaren Bereiches des das T-Profil aufweisenden Verbindungselementes (19, 20, 21) geringer ist als die Höhenabmessung des aufnehmenden Profils, wodurch ein Spiel zwischen dem mit dem Verbindungselement und dem mit dem Gegenstück versehenen Verbindungsteil (1 bzw. 2) gegeben ist.

7. Verbindungsstück nach Anspruch 6, **dadurch gekennzeichnet, daß** an einem der beiden Verbindungsteile eine Rastzunge (18) und der dem anderen der beiden Verbindungsteile, dem freien Ende der Rastzunge (18) gegenüberliegend eine Rastausnehmung (22) vorgesehen ist, wobei an dem die Rastausnehmung aufweisenden Teil zusätzlich ein an dem beweglichen Teil der Rastzunge in Anlage bringbarer Druckkörper (23) angeordnet ist, und wobei der Bewegungsweg des freien Endes der Rastzunge (18) beim Zueinanderbewegen der beiden Verbindungsteile (1, 2) und die Eindringtiefe des freien Endes der Rastzunge (18) in die Rastausnehmung (22) etwa dem Spiel (S) zwischen den beiden Verbindungsteilen (1, 2) entspricht.

8. Verbindungsstück nach Anspruch 7, **dadurch gekennzeichnet, daß** an beiden Verbindungsteilen (1, 2) an den einander zugewandten Seiten im eingeschobenen Zustand in ihrer im Rahmen des Spiels voneinander entfernten Lage einander hintergreifende Vorsprünge (24, 25) vorgesehen sind, die durch die federnde Rastzunge (18) über den Druckkörper in dieser hintergreifenden Lage gehalten sind, wobei die Höhe des übergreifenden Bereiches der Vorsprünge (24, 25) etwa dem Spiel (S) zwischen den beiden Verbindungsteilen (1, 2) entspricht.

## Claims

1. An arrangement for releasably attaching a connecting member for connecting flat objects, such as meshes, tarpaulins, foils or the like, to these objects, wherein projections, e.g. pegs, are provided, which extend away from a base plate and cooperate with a clamping element, **characterised in that** the projections (7) are of hook-like construction and pass through a respective elongate hole (8) in the clamping plate (5, 6), the elongate holes (8) extending in the direction of the extension of the hook of the projections (7) and the projections (7) being securable, e.g. by means of wedges (9), against movement with respect to the clamping plate in the end position, in which the hook extensions engage behind the rear surface of the clamping plate (5, 6).

2. An arrangement as claimed in Claim 1, **characterised in that** the wedges (9) are attached to a common carrier (10), which may be fixed to the clamping plate (5, 6) by means of a releasable snap connection.

3. An arrangement as claimed in Claim 2, **characterised in that** provided on the side of the clamping plate (5, 6) remote from the base plate (3, 4) there is a collar (11) directed away from the base plate (3, 4), the carrier (10) for the wedges (9) being constructed in the form of a substantially flat plate, which may be inserted into the edge of the collar (11) and may be fixed there by means of a snap connection (13, 14).

4. An arrangement as claimed in Claim 3, **characterised in that** the collar (11) is arranged extending around the periphery of the clamping plate (5, 6) and projecting from it approximately at right angles.

5. A connecting member, in particular provided with an arrangement as claimed in Claim 1, **characterised in that** it comprises two connecting portions (1, 2), one of which has, on the side of the base plate (3, 4) remote from the hook-like projections (7), connecting elements (15, 16, 17 and 19, 20, 21 respectively), for cooperating with counterparts provided on the other connecting portion, whereby the connecting element (10, 20, 21) is constructed in the form of a T profile, which may be slid into a receiving groove (15, 16, 17) with a complementary profile in the counterpart and may be fixed in the inserted position by means of a releasable locking connection (18, 22), the two cooperating connecting portions constituting the entire connecting member.

6. A connecting member as claimed in Claim 5, **characterised in that** the height dimension of the insertable region of the connecting element (19, 20, 21), having the T profile, is smaller than the vertical dimension of the receiving profile, whereby a clearance is present between the connecting portions (1, 2) provided with the connecting element and with the counterpart, respectively.

7. A connecting member as claimed in Claim 6, **characterised in that** provided on one of the two connecting portions there is a locking tongue (18) and on the other of the two connecting portions there is a locking recess (22) opposite to the free end of the locking tongue (18), whereby additionally arranged on the portion having the locking recess there is a pressure body (23), which may be moved into engagement with the movable portion of the locking tongue, and whereby the travel of the free end of the locking tongue (18) when the two connecting portions (1, 2) are moved towards one another and the penetration depth of the free end of the locking tongue (18) into the locking recess (22) approximately corresponds to the clearance (S) between the two connecting portions (1, 2).

8. A connecting member as claimed in Claim 7, **characterised in that** provided on the two connecting portions (1, 2), on the sides directed into one another in the inserted state in their position in which they are remote from one another in the context of the clearance, there are engaging projections (24, 25), which are held in this engaging position by the resilient locking tongue (18) via the pressure body, whereby the height of the engaging region of the projections (24, 25) approximately corresponds to the clearance (S) between the two connecting portions (1, 2).

## Revendications

1. Dispositif permettant de fixer de façon amovible une pièce d'assemblage pour assembler des objets plats, tels que des filets, des bâches, des feuilles ou similaires, sur ces objets, des saillies, telles que des doigts, dépassant d'une plaque de base, coopérant avec un élément de serrage, étant prévu(e)s, **caractérisé en ce que** les saillies (7) présentent la forme d'un crochet et traversent chacune un perçage longitudinal (8) ménagé dans la plaque de serrage (5, 6), les perçages longitudinaux (8) s'étendant en direction de la partie crochet des saillies (7), et les saillies (7), en position finale, dans laquelle les parties crochet saisissent par derrière la face arrière de la plaque de serrage (5, 6), étant susceptibles d'être bloquées pour empêcher leur déplacement vis-à-vis de la plaque de serrage, par exemple au moyen de clavettes (9).

2. Dispositif selon la revendication 1, **caractérisé en ce que** les clavettes (9) sont disposées sur un support (10) commun, qui est susceptible d'être fixé sur la plaque de serrage (5, 6) grâce à une liaison par encliquetage détachable.

3. Dispositif selon la revendication 2, **caractérisé en ce qu'**est prévu, sur la plaque de serrage (5, 6), du côté qui est opposé à la plaque de base (3, 4), un collet (11) orienté à l'opposé de la plaque de base (3, 4), le support (10) destiné aux clavettes (9) étant conformé en plaque sensiblement plane, qui est susceptible d'être insérée dans le bord du collet (11) et d'y être fixée grâce à la liaison par encliquetage (13, 14).

4. Dispositif selon la revendication 3, **caractérisé en ce que** le collet (11) est disposé à la périphérie de la plaque de serrage (5, 6) en dépassant de celle-ci approximativement à angle droit.

5. Pièce d'assemblage équipée, en particulier, d'un dispositif selon la revendication 1, **caractérisée en ce qu'**elle est constituée de deux parties d'assemblage (1, 2), dont une présente, sur la plaque de base (3, 4), du côté qui est opposé aux saillies (7) du type crochets, des éléments d'assemblage (15, 16, 17 et/ou 19, 20, 21) destinés à coopérer avec des éléments complémentaires prévus sur l'autre partie d'assemblage, l'élément d'assemblage (10, 20, 21) étant conformé en profilé en T susceptible d'être inséré dans une rainure formant logement (15, 16, 17), présentant un profil inverse, de l'élément complémentaire et étant susceptible, en position insérée, d'être fixé par une liaison par encliquetage (18, 22) détachable, les deux parties d'assemblage qui coopèrent constituant l'ensemble de la pièce d'assemblage.

6. Pièce d'assemblage selon la revendication 5, **caractérisée en ce que** la hauteur de la zone insérable de l'élément d'assemblage (19, 20, 21) qui présente le profilé en T est inférieure à la hauteur du profilé formant logement, ce qui a pour conséquence qu'un jeu existe entre la partie d'assemblage (1 resp. 2) qui est pourvue de l'élément d'assemblage et celle qui est pourvue de l'élément complémentaire.

7. Pièce d'assemblage selon la revendication 6, **caractérisée en ce qu'**est prévue, sur l'une des deux parties d'assemblage, une languette d'encliquetage (18) et, sur l'autre partie d'assemblage, un évidement d'encliquetage (22) situé en face de l'extrémité libre de la languette d'encliquetage (18), un corps exerçant une pression (23) susceptible de venir s'appliquer sur la partie mobile de la languette d'encliquetage étant prévu, en outre, sur la partie qui présente l'évidement d'encliquetage, la trajectoire de l'extrémité libre de la languette d'encliquetage (18), lorsqu'on rapproche les deux parties d'assemblage (1, 2), et la profondeur de pénétration de l'extrémité libre de la languette d'encliquetage (18) dans l'évidement d'encliquetage (22), correspondant approximativement au jeu (S) existant entre les deux parties d'assemblage (1, 2).

8. Pièce d'assemblage selon la revendication 7, **caractérisée en ce que** sont prévues, sur les deux parties d'assemblage (1, 2), sur les faces orientées l'une vers l'autre, à l'état inséré, dans leur position éloignée l'une de l'autre dans les limites du jeu, des saillies (24, 25) qui se saisissent réciproquement, qui sont maintenues dans cette position de saisie par la languette élastique (18), avec interposition du corps exerçant une pression, la hauteur de la zone des saillies (24, 25) qui saisit, correspondant approximativement au jeu (S) qui existe entre les deux parties d'assemblage (1, 2).
